# EUROPÄISCHE PATENTSCHRIFT

(11) **EP 4 428 405 B1**
(45) Veröffentlichungstag und Bekanntmachung des Hinweises auf die Patenterteilung: **16.04.2025**
(21) Anmeldenummer: 23161220.1
(22) Anmeldetag: 10.03.2023
(51) Int. Cl.: F16K 1/52, F16K 31/524, F16K 31/56

(54) **BEDIENEINRICHTUNG FÜR EIN VENTILOBERTEIL FÜR SANITÄRARMATUREN**
OPERATING DEVICE FOR A VALVE TOP FOR SANITARY FITTINGS
DISPOSITIF DE COMMANDE POUR UN ÉLÉMENT SUPÉRIEUR DE SOUPAPE POUR ROBINETTERIES SANITAIRES

(43) Veröffentlichungstag der Anmeldung: 11.09.2024
(73) Patentinhaber: Flühs Drehtechnik GmbH, 58515 Lüdenscheid (DE)
(72) Erfinder: Roicke, Stefan, 58849 Herscheid (DE)
(74) Vertreter: Patentanwälte Dörner & Kötter PartG mbB

(56) Entgegenhaltungen:
- EP-A1- 1 736 695
- EP-A1- 3 366 958
- EP-A1- 3 561 351
- EP-A1- 3 919 797
- DE-A1- 102012 221 043
- DE-A1- 2 856 242
- JP-A- 2005 264 459
- JP-A- 2019 066 007
- US-A1- 2019 178 398

## Beschreibung

Die Erfindung betrifft eine Bedieneinrichtung für ein Ventiloberteil für Sanitärarmaturen, das eine Steuerspindel aufweist, über die ein Ventilkörper betätigbar ist und die einen Anschlussabschnitt aufweist, wobei die Bedieneinrichtung einen Griff umfasst, der eine Aufnahme zur drehfesten, insbesondere formschlüssigen Verbindung mit dem Anschlussabschnitt der Steuerspindel aufweist.

Mit Hilfe von Ventiloberteilen wird der Austritt von Medien aus Armaturen gesteuert. Zu diesem Zweck wird das Ventiloberteil mittels seines Kopfstücks in das Gehäuse einer Armatur geschraubt. Ventiloberteile der vorgenannten Art sind in den unterschiedlichsten Ausgestaltungen bekannt. So ist beispielsweise aus der EP 1 696 162 A1 ein Ventiloberteil bekannt, das ein Kopfstück aufweist, das von einer Spindel durchsetzt ist, die in dem Kopfstück formschlüssig mit einer Steuerscheibe verbunden ist, die an einer ortsfest angeordneten Einlassscheibe anliegt. Durch Drehung der Steuerscheibe gegenüber der Einlassscheibe ist eine Steuerung des Wasserdurchflusses erzielt. Zur Betätigung der Spindel ist diese an ihrer aus dem Kopfstück herausragenden Stirnseite außen als Außenvielkant ausgeführt und innen mit einem Gewindesackloch für die formschlüssige Befestigung eines Drehgriffs versehen. Des Weiteren offenbart die EP 3 561 351 A1 eine Bedieneinrichtung mit den Merkmalen des Oberbegriffs von Anspruch 1.

Aus der EP 2 522 887 A1ist weiterhin ein Ventiloberteil bekannt, bei dem zur Steuerung des Durchflusses eines Fluids ein Ventilkörper vorgesehen ist, der über eine Spindel innerhalb des Kopfstücks linear bewegbar ist. Hierbei ist eine Spindel drehbar in einem Kopfstück gelagert und über ein Gewinde mit einem verdrehsicher axial in dem Kopfstück geführten Ventilkörper verbunden. Eine Drehung der Spindel bewirkt so eine axiale Bewegung des Ventilkörpers innerhalb des Kopfstücks.

Bei der Gestaltung von Armaturen wird zunehmend eine Bedienung des Ventiloberteils über Drücker oder Taster gewünscht. Hierzu kommen regelmäßig elektromagnetisch betriebene Ventile zum Einsatz. Nachteilig an diesen Ventiloberteilen ist jedoch, dass die elektromagnetischen Kontakte bei der Verschraubung bzw. Verklebung des Ventiloberteils in Mitleidenschaft gezogen werden können, wodurch die Zuverlässigkeit beeinträchtigt ist. Darüber hinaus erfordern solche Ventile eine zusätzliche Spannungsquelle. Zudem ist bei diesen Ventilen in der Regel keine Mengensteuerung möglich.

Zur Überwindung dieser Nachteile wird in der EP 3 366 959 A1 ein Ventiloberteil vorgeschlagen, bei dem der Griff eine Steuerkappe aufweist ist, mit der er entlang des Kopfstücks verschiebbar ist und über die ein Steuerkolben betätigbar ist, wobei in die Mantelfläche des Kopfstücks außen eine zwei Arretierungspositionen aufweisende Kurvenbahn eingebracht ist, in die ein an der Steuerkappe angeordneter Führungsstift eingreift. Durch eine Druckbetätigung des Griffs mit der Steuerkappe ist eine geführte axiale Bewegung des Steuerkolbens erzielt, welche in wenigstens zwei Positionen, beispielsweise in den Positionen "Ventil geöffnet" und "Ventil geschlossen" arretierbar ist.

Die Arretierung über die in der Steuerkappe angeordneten Führungsstifte, die in die Kurvenbahnen eingreifen hat sich in der Praxis bewährt. Gleichwohl erfordert die vorgeschlagene Lösung ein Kopfstück mit einer integrierten Kurvenbahn, wodurch dieses aufwendig herzustellen ist. Darüber hinaus ist eine Nachrüstung von Ventiloberteilen mit einer solchen Druckbetätigung nicht möglich.

Hier setzt die vorliegende Erfindung an. Der Erfindung liegt die Aufgabe zu Grunde, eine Bedieneinrichtung für ein Ventiloberteil für Sanitärarmaturen bereitzustellen, die aufwandminimiert herstellbar ist und bei der eine Nachrüstung vorhandener Ventiloberteile ermöglicht ist. Gemäß der Erfindung wird diese Aufgabe durch eine Bedieneinrichtung mit den Merkmalen des Patentanspruchs 1 gelöst.

Mit der Erfindung ist eine Bedieneinrichtung für ein Ventiloberteil für Sanitärarmaturen bereitgestellt, die aufwandminimiert herstellbar ist und bei der eine Nachrüstung vorhandener Ventiloberteile ermöglicht ist. Dadurch, dass der Griff relativ zu der Aufnahme in axialer Richtung verschiebbar angeordnet ist, wobei eine Arretiereinrichtung angeordnet ist, über die der Griff in wenigstens zwei definierten axialen Positionen relativ zu einer von der Aufnahme aufgenommenen Steuerspindel festlegbar ist, ist eine einfache Nachrüstung eines Ventiloberteils mit einer Drückfunktion durch Verbindung dessen Spindel mit der Aufnahme ermöglicht. Die einzige Voraussetzung ist, dass das Ventiloberteil eine Spindel aufweist, durch dessen Drehung eine Betätigung eines Ventilkörpers erfolgt.

Vorzugsweise ist das Eingriffsteil durch eine Kugel gebildet, die in dem Steuerzylinder radial bewegbar geführt ist. Vorzugsweise ist die Kugel zusätzlich auch umlaufend geführt. Hierdurch ist eine durch die Kugeln indizierte Drehung des Griffs bei dessen Betätigung vermieden. Die Kugeln haben gegenüber den im Stand der Technik bekannten Führungsstiften zudem den Vorteil, dass gelegentlich auftretende Fehlfunktionen aufgrund von durch Überbelastung verformten Führungsstiften oder deren Führungen vermieden sind.

In Ausgestaltung der Erfindung weist der Griff eine Stellhülse auf, die zumindest bereichsweise den Steuerkolben umgibt. Hierdurch ist der Griff entlang des Steuerkolbens geführt, wobei die Arretiereinrichtung zwischen dem Steuerkolben und dem in der Stellhülse angeordneten Steuerzylinder wirkt. Zur radial sowie umlaufend bewegbaren Anordnung einer Kugel, die in die Steuerkulisse des Steuerkolbens eingreift, kann diese in einem an dem Steuerzylinder angeordneten Käfig angeordnet sein. Bevorzugt weist der Steuerkolben einen unrunden Außenquerschnitt auf und der Steuerzylinder weist einen mit diesem Außenquerschnitt korrespondierenden Innenquerschnitt auf, wodurch der Steuerkolben drehfest, jedoch verschiebbar in dem Steuerzylinder geführt ist.

In weiterer Ausgestaltung der Erfindung ist zwischen dem Steuerzylinder und dem Steuerkolben eine Feder angeordnet, die gegen den Steuerzylinder vorgespannt ist. Hierdurch ist eine automatische Rückführung des mit dem Griff verbundenen Steuerzylinders entlang des Steuerkolbens nach Einwirkung einer Betätigungskraft bewirkt.

In Weiterbildung der Erfindung weist die Stellhülse eine Innenverzahnung auf, die in eine an dem Steuerkolben angeordnete Außenverzahnung eingreift, wodurch der Griff axial entlang dem Steuerkolben verschiebbar geführt ist. Hierdurch ist eine drehfeste Verbindung der Stellhülse mit dem Steuerkolben bei gleichzeitiger axialer Verschiebbarkeit erzielt. Vorzugsweise ist ein Mitnehmerstück angeordnet, dass die Außenverzahnung aufweist und das mit dem Steuerkolben drehfest verbunden ist.

Bevorzugt ist die Aufnahme zur Verbindung mit dem Anschlussabschnitt einer Steuerspindel an dem Steuerkolben angeordnet. Vorteilhaft ist die Aufnahme zur formschlüssigen Verbindung mit einem entsprechend unrund ausgebildeten Anschlussabschnitt einer Steuerspindel ausgebildet. Dadurch ist eine Übertragung eines Drehmoments von dem Griff auf den Steuerkolben und einer mit diesem verbundenen Steuerspindel eines Ventiloberteils ermöglicht. Durch Drücken auf den Griff kann dieser über die Arretiereinrichtung aus einer eingefahrenen Position in eine Bedienposition herausbewegt werden, wonach durch Drehen an dem Griff eine Betätigung eines mit diesem verbundenen Ventiloberteils erfolgen kann.

In Ausgestaltung der Erfindung weist der Steuerzylinder ein Außengewinde auf, auf das ein Adapterstück mit seinem Innengewinde aufgeschraubt ist, wobei das Adapterstück in der Stellhülse des Griffs drehfest sowie längsverschieblich gehalten ist. Hierdurch ist eine Feineinstellung der axialen Position des Griffs an der Steuerspindel eines in einer Wand eingebauten Ventiloberteils ermöglicht. Durch eine Längsverschiebung des Griffs in eine Justierposition, in welcher die Stellhülse nicht mit ihrer Innenverzahnung in die Außenverzahnung des Steuerkolbens eingreift, erfolgt durch eine Drehung des Griffs eine Längsverstellung des Adapterstücks entlang des Außengewindes des Steuerzylinders. Ungenauigkeiten im Zuge des Einbaus eines Ventiloberteils und der in diesem Zuge üblicherweise erfolgten bedarfsgerechten Ablängung der Steuerspindel können so durch Verstellung des Adapterstücks ausgeglichen werden.

In weiterer Ausgestaltung weist das Adapterstück Rastnasen auf, wobei innen in der Stellhülse wenigstens eine Rastnut angeordnet ist, mit der die Rastnasen in einer definierten Position des Adapterstücks verrastbar sind. Hierdurch ist eine definierte axiale Positionierung des Adapterstücks in der Stellhülse ermöglicht, in der kein Eingriff ihrer Innenverzahnung in die Außenverzahnung des Steuerkolbens besteht (Justierposition).

Bevorzugt sind innen in der Stellhülse axial beabstandet zueinander wenigstens zwei Rastnuten vorzugsweise radial umlaufend angeordnet. Hierdurch ist eine erste axiale Positionierung des Adapterstücks für die Justierung und eine zweite definierte Positionierung des Adapterstücks in Betriebsposition mit Eingriff ihrer Innenverzahnung in die Außenverzahnung des Steuerkolbens ermöglicht.

In weiterer Ausgestaltung der Erfindung ist eine Einbauhülse angeordnet, deren Innendurchmesser im Wesentlichen dem Außendurchmesser des Griffs entspricht wobei die Position des Griffs in einem definierten Abstand zur Einbauhülse einstellbar ist. Vorzugsweise weist die Einbauhülse einen umlaufenden Kragen auf, der bei Positionierung des Griffs in einer definierten Position in der Einbauhülse mit der Oberfläche des Griffs eine gemeinsame Ebene ausbildet. Hierdurch ist eine optisch ansprechende Integration des Griffs in eine diese umgebene Ebene ermöglicht. Der Kragen kann sowohl ringförmig als auch in Form einer Platte jedweder geometrischen Form ausgebildet sein.

Gegenstand der vorliegenden Erfindung ist weiterhin ein Ventiloberteil für Sanitärarmaturen mit einer solchen Bedieneinrichtung nach dem Patentanspruch 12 sowie eine Sanitärarmatur mit einem Ventiloberteil für Sanitärarmaturen mit einer solchen Bedieneinrichtung nach dem Patentanspruch 13.

Unter der Justierposition ist vorliegend die Stellung des Griffs zu verstehen, in der die Rastnasen des Adapterstücks in die zweite, untere Rastnut der Stellhülse eingreift. In dieser Position ist eine Justierung über den Gewindeeingriff zwischen dem Außengewinde des Steuerzylinders und dem Innengewinde des Adapterstücks ermöglicht. Die Innenverzahnung der Stellhülse ist außer Eingriff mit der Außenverzahnung des Steuerkolbens.

Unter der Betriebsposition ist vorliegend die Stellung des Griffs zu verstehen, in der die Rastnasen des Adapterstücks in die erste, obere Rastnut der Stellhülse eingreift. In dieser Position ist die Innenverzahnung der Stellhülse im Eingriff mit der Außenverzahnung des Steuerkolbens. Eine Justierung über den Gewindeeingriff zwischen dem Außengewinde des Steuerzylinders und dem Innengewinde des Adapterstücks ist nicht möglich.

Unter der Bedienposition ist vorliegend die Stellung des Griffs zu verstehen, in der die Kugeln in der oberen Position der Steuerkulisse anliegen. Der Griff ist so zur einfachen Bedienung "ausgefahren".

Unter der eingefahrenen Position ist vorliegend die Stellung des Griffs zu verstehen, in der die Kugeln im Haltebereich der Steuerkulisse anliegen. Der Griff ist hier in einer eingefahrenen Position arretiert, in der beispielsweise der Griff bündig mit einer diesen Griff einfassenden Umgebung ist.

Andere Weiterbildungen und Ausgestaltungen der Erfindung sind in den übrigen Unteransprüchen angegeben. Ausführungsbeispiele sind in den Zeichnungen dargestellt und werden nachfolgend im Einzelnen beschrieben. Es zeigen:
- Figur 1:: die schematische Darstellung eines Ventiloberteils mit einer Bedieneinrichtung nach einer Grobmontage mit Griff in Bedienposition;
- Figur 2:: die schematische Darstellung des Ventiloberteils mit Bedieneinrichtung nach Figur 1 mit Griff in Justierposition (vor erfolgter Justierung);
- Figur 3:: die schematische Darstellung des Ventiloberteils mit Bedieneinrichtung nach Figur 2 nach erfolgter Justierung des Griffs;
- Figur 4:: die schematische Darstellung des Ventiloberteils mit Bedieneinrichtung nach Figur 3 mit Griff in Betriebsposition;

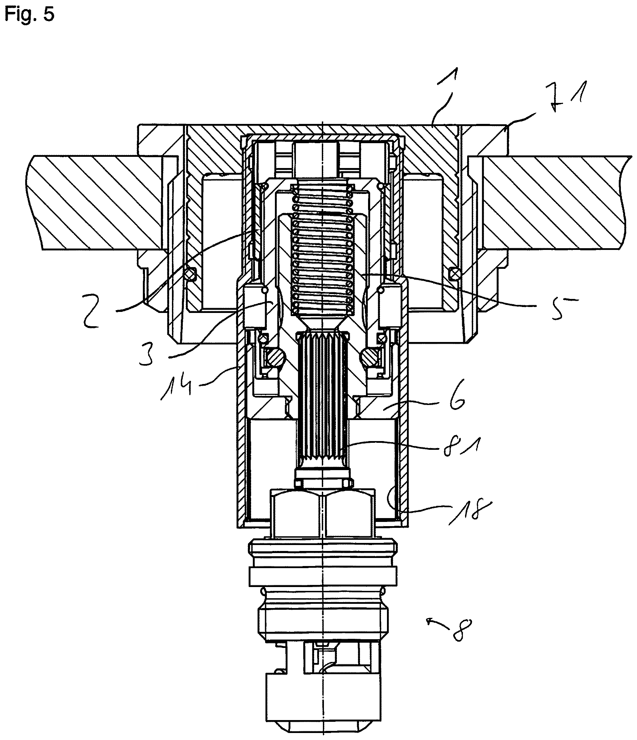

- Figur 5:: die Darstellung des Ventiloberteils mit Bedieneinrichtung aus Figur 4 mit Griff in eingefahrener Position;

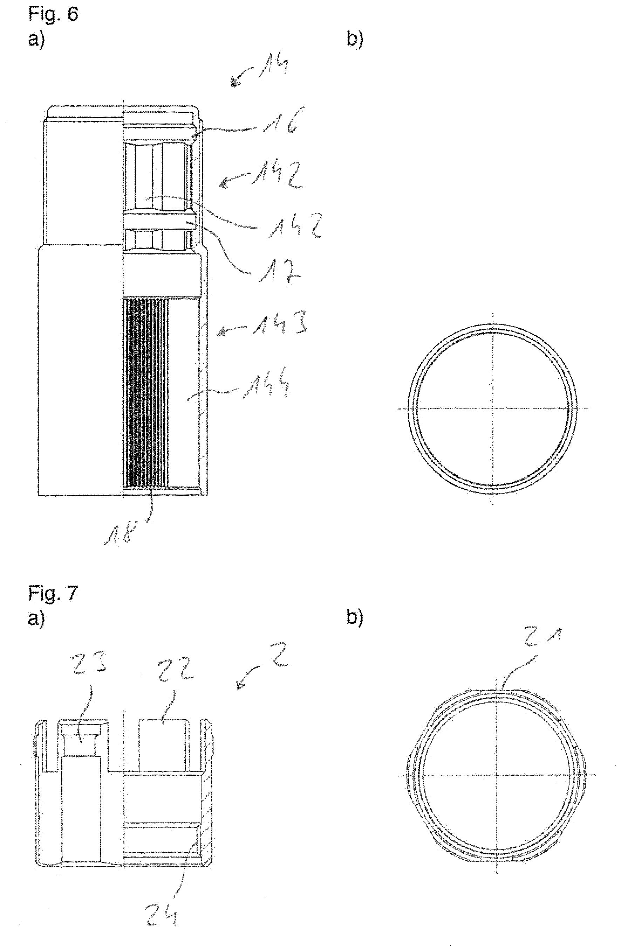

- Figur 6:: die schematische Darstellung der Stellhülse des Griffs der Bedieneinrichtung aus Figur 1
a) im Teilschnitt,
b) in der Draufsicht;
- Figur 7:: die schematische Darstellung des Adapterstücks der Bedieneinrichtung aus Figur 1
a) im Teilschnitt,
b) in der Draufsicht;

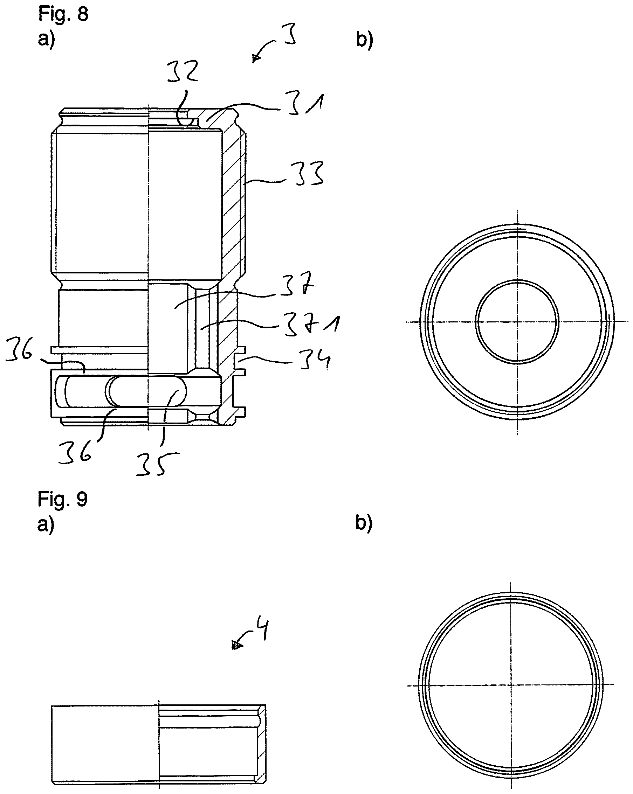

- Figur 8:: die schematische Darstellung des Steuerzylinders der Bedieneinrichtung aus Figur 1
a) im Teilschnitt,
b) in der Draufsicht;
- Figur 9:: die schematische Darstellung der Begrenzungshülse des Steuerzylinders der Bedieneinrichtung aus Figur 1
a) im Teilschnitt,
b) in der Draufsicht;

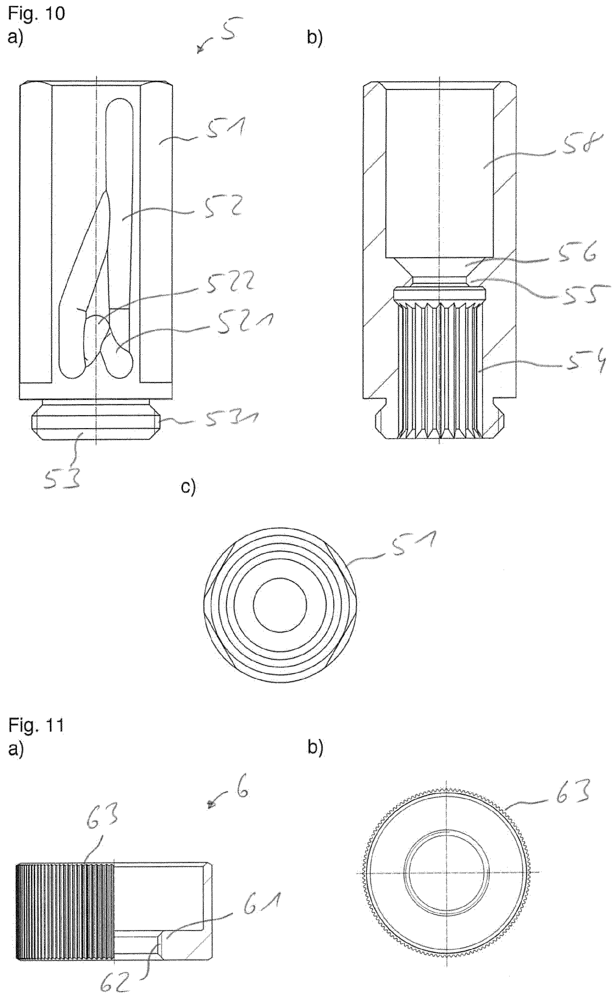

- Figur 10:: die schematische Darstellung des Steuerkolbens der Bedieneinrichtung aus Figur 1
a) in der Seitenansicht;
b) im Längsschnitt;
c) in der Draufsicht;
- Figur 11:: die schematische Darstellung des Mitnehmerstücks des Steuerkolbens der Bedieneinrichtung aus Figur 1
a) im Teilschnitt,
b) in der Draufsicht.
- Figur 12:: die schematische Darstellung der Bedieneinrichtung (ohne Griff) aus Figur 3 in Bedienposition
- Figur 13:: die Detaildarstellung des Kugelkäfigs der Bedieneinrichtung aus Figur 12;
- Figur 14:: die Darstellung der Bedieneinrichtung aus Figur 12 mit erhöhter Zuglast am Steuerzylinder und
- Figur 15:: die Detaildarstellung des Kugelkäfigs der Bedieneinrichtung aus Figur 14.

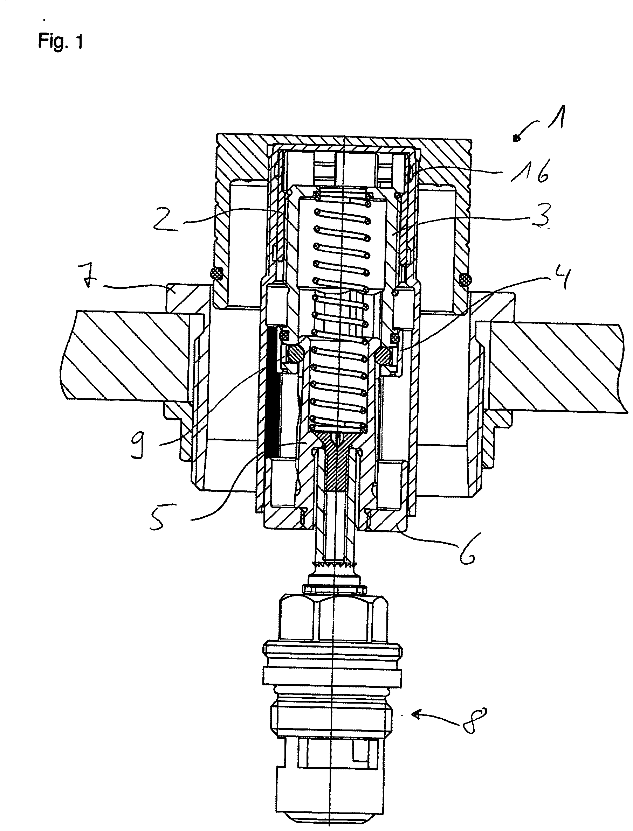

Die als Ausführungsbeispiel gemäß Figur 1 gewählte Bedieneinrichtung umfasst im Wesentlichen einen Griff 1, in dem ein Adapterstück 2 axial verschiebbar angeordnet ist, das einen Steuerzylinder 3 aufnimmt, mit dem es im Gewindeeingriff ist, der endseitig mit einer Begrenzungshülse 4 versehen ist und in dem ein Steuerkolben 5 axial verschiebbar angeordnet ist, der endseitig mit einem Mitnehmerstück 6 versehen ist und der eine Aufnahme zur formschlüssigen Verbindung mit dem in diesem Beispiel unrunden Anschlussabschnitt 82 der Steuerspindel 81 eines Ventiloberteils 8 aufweist. Alternativ kann der Anschlussabschnitt der Steuerspindel 81 auch zylindrisch ausgebildet sein. In diesem Fall ist eine drehfeste Verbindung beispielsweise mittels Kleben erforderlich.

Der Griff 1 ist aus einem hohlzylindrischen, topfförmig ausgebildeten Griffstück 11 gebildet, das innen zentrisch eine Gewindebohrung 12 aufweist, in die koaxial zur zylindrischen Seitenwand des Griffstücks 11 eine Stellhülse 14 eingeschraubt und verklebt ist. Alternativ kann der Griff 1 auch einteilig ausgeführt sein. Außen ist das Griffstück 11 mit einer Dichtungsnut 13 versehen, die einen O-Ring 131 aufnimmt. Griffstück 11 und Stellhülse 12 sind im Ausführungsbeispiel als Messingdrehteile hergestellt.

Die Stellhülse 14 ist im Wesentlichen hohlzylindrisch ausgebildet und weist einen ersten Abschnitt 141 auf, an den sich ein zweiter, durchmessererweitertet Abschnitt 143 anschließt. Der erste Abschnitt 141 ist außen mit einem Außengewinde 15 versehen, mit dem die Stellhülse in 14 in die Gewindebohrung 12 des Griffstücks 11 eingeschraubt und verklebt ist. In seine einen weitgehend zwölfeckförmigen Querschnitt aufweisende Innenmantelfläche sind in dem ersten Abschnitt 141 eine erste, obere Rastnut 16 und beabstandet zu dieser eine zweite, untere Rastnut 17 angeordnet. Die weitgehend zwölfeckförmige Querschnittskontur der Innenmantelfläche des ersten Abschnitts 141 dient der drehfesten Aufnahme des Adapterstücks 2, dessen Außenmantelfläche eine hierzu korrespondierende zwölfeckförmige Querschnittskontur aufweist. Die weitgehend zwölfeckförmige Querschnittskontur der Innenmantelfläche des ersten Abschnitts 141 sowie der Außenmantelfläche des Adapterstücks 2 ist durch sechs regelmäßig beabstandet in die Zylindermantelfläche eingebrachte rechteckige Abflachungen 142, 21 erzielt.

Alternativ kann an Stelle der zwölfeckförmigen Querschnittskontur auch jedwede andere unrunde, vorzugsweise vieleckige Kontur verwendet werden. Der zweite Abschnitt 143 ist mit einer Innenverzahnung 18 versehen, die sich weitgehend über die gesamte Innenmantelfläche des zweiten Abschnitts 143 erstreckt. Die Innenmantelfläche des zweiten Abschnitts 143 weist eine weitgehend achteckförmige Querschnittskontur auf, die durch vier regelmäßig beabstandet in die mit der Innenverzahnung 18 versehene Zylinderinnenmantelfläche eingebrachte rechteckige Abflachungen 144 erzielt ist.

Das Adapterstück 2 ist im Wesentlichen hohlzylindrisch ausgebildet und weist, wie bereits ausgeführt, eine mit der Innenmantelfläche der Stellhülse 14 korrespondierende Außenmantelfläche mit nahezu zwölfeckförmigem Querschnitt auf. Im Bereich einer jeden Abflachung 21 ist in das Adapterstück 2 an seinem der Gewindebohrung 12 des Griffstücks 11 zugewandten Seite jeweils eine rechteckige Ausnehmung eingebracht, wodurch umlaufend sechs regelmäßig beabstandet zueinander angeordnete Rastzungen 22 begrenzt sind, die radial verlaufende, nach außen kragende Rastnasen 23 zum Eingriff in die Rastnuten 16, 17 der Stellhülse 14 aufweisen. Auf seiner Innenmantelfläche ist das Adapterstück 2 mit einem Innengewinde 24 versehen. Im Ausführungsbeispiel ist das Adapterstück 2 aus Kunststoff hergestellt.

Der Steuerzylinder 3 ist als im Wesentlichen hohlzylindrisches Messingdrehteil ausgebildet. An seiner dem Adapterstück 2 zugewandten Stirnseite weist der Steuerzylinder 3 einen innendurchmesserverjüngenden Absatz 31 auf, in den innen eine Stufe 32 eingebracht ist. Außen weist der Steuerzylinder 3 ein Außengewinde 33 auf, das sich etwa über die Hälfe seiner Länge erstreckt. Beabstandet zu dem Außengewinde 33 ist eine Nut 34 zur Aufnahme eines O-rings 341 angeordnet. An die Nut 34 schließen sich zwei diametral gegenüberliegende, radial sich erstreckende Langlochbohrungen 35 an, die von zwei axial beabstandet angeordneten, umlaufenden Stegen 36 eingefasst sind. Zwischen den Langlochbohrungen 35 und dem Außengewinde 33 weist der Steuerzylinder 3 innen einen durchmesserverjüngenden Absatz 37 auf, in den umlaufend radial beabstandet vier Führungskerben 371 eingebracht sind. Die Führungskerben 371 dienen der drehfesten Führung des Steuerkolbens 4.

In die beiden Langlochbohrungen 35 ist jeweils eine Kugel 38 eingebracht, deren Durchmesser etwas kleiner ist, als die Breite der Langlochbohrung 35, so dass diese bereichsweise durch die jeweilige Langlochbohrung 35 hindurchragt und zwischen den Stegen 36 radial und umlaufend beweglich geführt ist. An seinem die Langlochbohrungen 35 aufweisenden endseitigen Abschnitt ist auf dem Steuerzylinder 3 eine Begrenzungshülse 4 vorhanden, in der eine Ringfeder 9 angeordnet ist. Die Begrenzungshülse 4 umgreift die Stege 36 und ist durch einen O-Ring 341 gehalten. Die Begrenzungshülse 4 bildet mit den Stegen 36, der Ringfeder 9 und den Langlochbohrungen 35 einen Kugelkäfig für die beiden Kugeln 38 aus, durch den ihre Bewegung in radialer Richtung begrenzt ist.

Der Steuerkolben 5 ist als im Wesentlichen zylindrisches Messingdrehteil ausgebildet. In seine zylindrische Außenmantelfläche sind radial beabstandet zueinander vier Abflachungen 51 eingebracht, wodurch ein im Wesentlichen achteckförmiger Querschnitt gebildet ist. Über die so gebildeten Ecken ist der Steuerkolben 5 in den Führungskerben 371 des Steuerzylinders 3 geführt. Jeweils zwischen zwei Abflachungen 51 sind in die Außenmantelfläche weiterhin diametral gegenüberliegend zwei Steuerkulissen 52 eingebracht. An seinem dem Steuerzylinder 3 abgewandten Ende ist ein durchmesserreduzierter Absatz 53 angeordnet, der ein Außengewinde 531 aufweist. Durch den Absatz 53 hindurch erstreckt sich eine in Form eines Innenvielecks ausgebildete Aufnahme 54 für die ein Außenvieleck aufweisende Steuerspindel 81 eines Ventiloberteils 8. An die Aufnahme 54 schließt sich ein innendurchmesserverjüngter Abschnitt 55 an, in den zentrisch eine Kegelbohrung 56 zur Aufnahme des Kopfes einer Senkkopfschraube 82 eingebracht ist. An den innendurchmesserverjüngten Abschnitt 55 schließt sich ein innendurchmessererweiterter Abschnitt 58 an, durch den ein Absatz 57 gebildet ist, der als Federsitz für eine Druckfeder 59 dient.

Das Mitnehmerstück 6 ist als im Wesentlichen hohlzylindrisches Messingdrehteil ausgebildet und weist an seinem dem Steuerzylinder 3 entgegengesetzten Ende einen innendurchmesserverjüngten Abschnitt 61 auf, der mit einem Innengewinde 62 versehen ist. Die Außenmantelfläche des Mitnehmerstücks 6 ist mit einer Außenverzahnung 63 zum Eingriff in die Innenverzahnung 18 der Stellhülse 14 versehen.

Das Adapterstück 2 ist mit seinem Innengewinde 24 auf das Außengewinde 33 des Steuerzylinders 3 geschraubt. In den Steuerzylinder 3 ist der Steuerkolben 5 eingesetzt, der durch seine mit der Innenmantelfläche des Steuerzylinders 3 korrespondierend ausgebildete unrunde Außenmantelfläche in dem Steuerzylinder 3 drehfest, jedoch axial verschiebbar geführt ist. Die durch die Langlochbohrungen 35 des Steuerzylinders 3 bereichsweise hindurchtretenden Kugeln 38 greifen dabei jeweils in eine Steuerkulisse 52 des Steuerkolbens 5 ein. An dem Absatz 57 des Steuerkolbens 5 liegt die Druckfeder 59 an, die auf ihrer gegenüberliegenden Seite gegen die Stellhülse vorgespannt ist.

In Betriebsposition des Griffs 1 mit seiner Stellhülse 14, in der die Rastnasen 23 der Rastzungen 22 des auf diesem aufgeschraubten Adapterstücks 2 in die obere, erste Rastnut 16 der Stellhülse 14 eingreifen, ist die Innenverzahnung der Stellhülse 14 mit der Außenverzahnung 63 des Mitnehmerstücks 6 im Eingriff. In dieser Betriebsposition ist eine Übertragung eines Drehmoments von dem Griff 1 auf das mit der Steuerspindel 81 des Ventiloberteils 8 verbundenen Mitnehmerstücks 6 ermöglicht. Das Ventiloberteil 8 ist im Ausführungsbeispiel gemäß der EP 1 696 162 A1 ausgebildet. Es weist eine Kopfstück 83 auf, das von der Steuerspindel 81 axial durchsetzt ist.

Bei der wandseitigen Montage einer Sanitärarmatur, beispielsweise einer Duscharmatur, werden die Wasserleitungen von dem Installateur in der Wand an ein Ventiloberteil 8 der Armatur angeschlossen. Das Ventiloberteil 8 weist regelmäßig eine lange Steuerspindel 81 auf, die nach Fertigstellung der wandseitigen Arbeiten, einschließlich möglicher Fliesenarbeiten, auf ein gewünschtes Maß abgelängt wird. Die Steuerspindel 81 einrahmend ist der Wanddurchtritt mit einer Einbauhülse 7 versehen. Die Steuerspindel 81 wird mit ihrer Außenverzahnung in die eine Innenverzahnung aufweisende Aufnahme 54 des Steuerkolbens 5 eingeführt und über eine Senkkopfschraube 82 befestigt. Eine solche Einbausituation ist in Figur 1 schematisch dargestellt. Aufgrund von Ungenauigkeiten beim Einbau des Ventiloberteils 8 und dem Ablängen der Steuerspindel 81 ragt das Griffstück 11 des Griffs 1 deutlich über den Kragen 71 der Einbauhülse 7 hinaus, die in diesem Ausführungsbeispiel ein Außengewinde 72 aufweist, das mit einer Kontermutter 73 verschraubt ist.

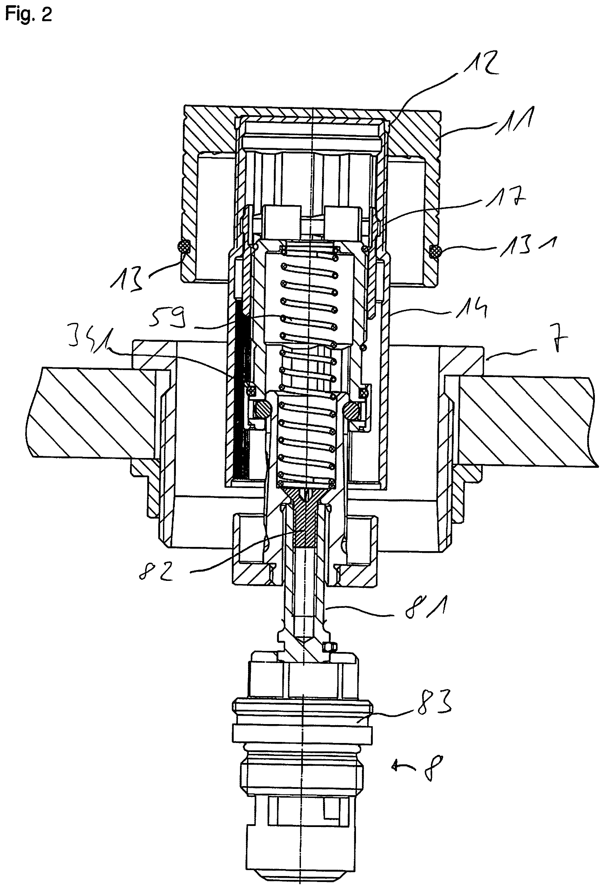

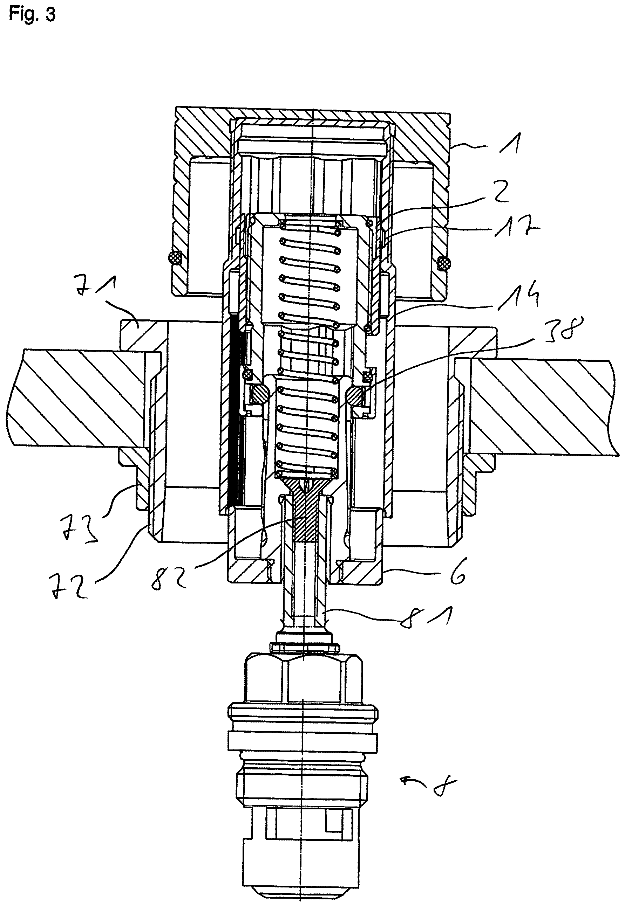

Der Griff 1 kann nun mit seiner längsverschieblich mit dem Adapterstück 2 verbundenen Stellhülse 14 durch Ziehen an dem Griffstück 11 auf dem Adapterstück 2 verschoben werden, bis die Rastnasen 23 der Rastzungen 22 in die zweite, untere Rastnut 17 der Stellhülse 14 einrasten. In dieser Position ist die Innenverzahnung 18 der Stellhülse 14 außer Eingriff mit der Außenverzahnung 63 des Mitnehmerstücks 6 (vgl. Figur 2). Durch Drehen an dem Griffstück 11 kann nun das drehfest mit der Stellhülse 14 verbundene Adapterstück 2 über den Gewindeeingriff mit dem Außengewinde 33 des Steuerzylinders 3 axial relativ zu diesem verstellt werden (vgl. Figur 3).

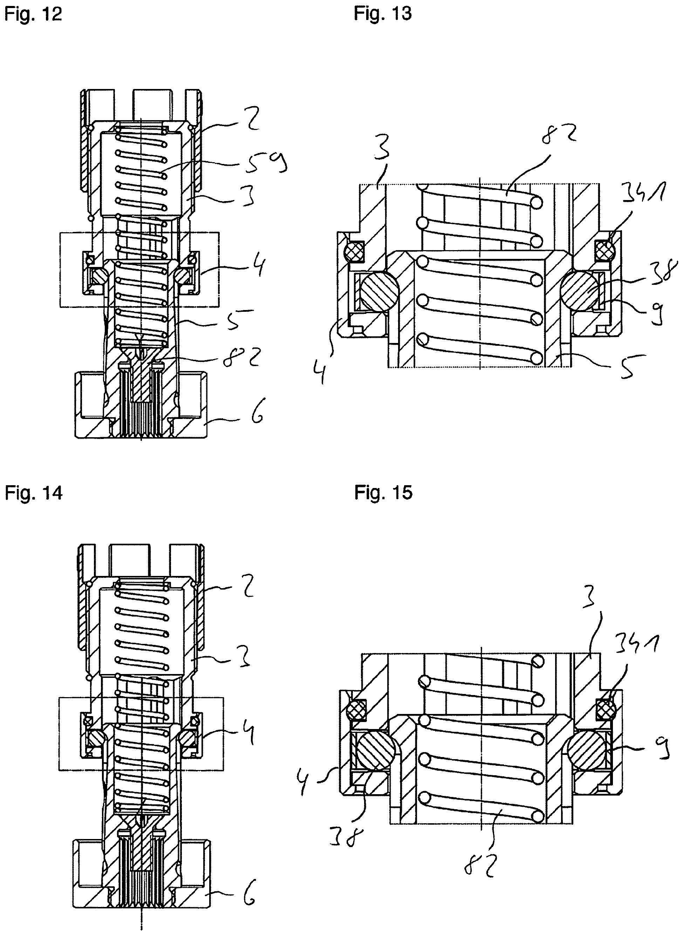

Bei der Umstellung des Griffs 1 mit seiner Stellhülse 14 aus der Betriebsposition in die Justierposition ist zum Ausbringen der Rastnasen 23 der Rastzungen 22 aus der ersten, oberen Rastnut 16 eine Zugkraft erforderlich, um die Rastnasen 23 in die zweite, untere Rastnut 17 zu verbringen. Durch diese Zugkraft wird zugleich eine Zugkraft zwischen Steuerzylinder 3 und Steuerkolben erzeugt, wodurch die an in der Steuerkulisse 52 des Steuerkolbens 5 geführten Kugeln 38 radial nach außen gegen die Ringfeder 9 gedrückt werden. Durch die Begrenzungshülse 4 ist ein Austreten der Kugeln 38 aus der Steuerkulisse 52 verhindert (vgl. Figuren 13 und 15).

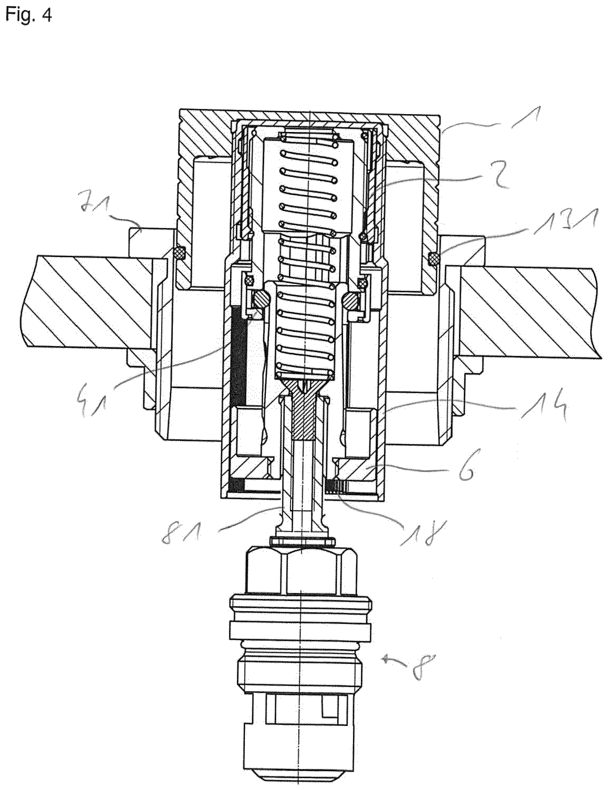

Nachfolgend kann die Stellhülse 14 durch Druck auf das Griffstück 11 wieder entlang des Adapterstücks 2 verschoben werden, bis die Rastnasen 23 der Rastzungen 22 in die erste, obere Rastnut 16 der Stellhülse 14 einrasten. Die Bedieneinheit ist nun gegenüber der Einbauhülse 7 justiert. Sie befindet sich in der Betriebsposition (vgl. Figur 4).

Durch Drücken des Griffs 1 wird der Steuerzylinder 3 über die Stellhülse 14 entlang des Steuerkolbens 5 bewegt, wobei die Kugeln 38 in der Steuerkulisse 52 laufen. Hierbei können sich die Kugeln 38 in den Langlochbohrungen 35 radial bewegen. Am Anschlag des Steuerkolbens 5 in dem Steuerzylinder 3 erreichen die Kugeln 38 den Umschaltabschnitt 521 der jeweiligen Steuerkurve 52. Nach Loslassen des Griffs 1 wird der Steuerzylinder 3 durch die Rückstellkraft der Druckfeder 59 zurückbewegt, wodurch die Kugeln 38 in den Haltebereich 522 der Steuerkulisse 52 bewegt werden. In dieser Stellung ist der Griff 1 durch die Kugeln 38 gehalten. In dieser Position ist der Griff 1 vollständig in die Einbauhülse 7 versenkt in der eingefahrenen Position, wobei die Oberflächen von Griff 1 und Kragen 71 der Einbauhülse 7 auf einer Ebene liegen.

Bei erneutem Drücken des Griffs 1 werden die Kugeln 38 aus dem Haltebereich 522 der Steuerkulisse 52 herausbewegt. Nach Loslassen des Griffs 1 wird der Steuerzylinder 3 durch die Rückstellkraft der Druckfeder 59 nun vollständig zurückbewegt. In dieser Bedienposition ragt der Griff weit aus der Einbauhülse 7 hinaus. Durch den Eingriff der Innenverzahnung 18 der Stellhülse 14 mit der Außenverzahnung 63 des Mitnehmerstücks 6, das über den Steuerkolben 5 mit der Steuerspindel 81 des Ventiloberteils 8 verbunden ist, kann nun eine Betätigung des Ventiloberteils 8 durch eine Drehung der Steuerspindel 81 über den Griff 1 erfolgen. Nach erfolgter Betätigung des Ventiloberteils 8 kann durch erneutes Drücken des Griffs 1 dieser wieder in der Einbauhülse 7 versenkt werden.

## Patentansprüche

1. Bedieneinrichtung für ein Ventiloberteil für Sanitärarmaturen, das eine Steuerspindel (81) aufweist, über die ein Ventilkörper betätigbar ist und die einen Anschlussabschnitt aufweist, wobei die Bedieneinrichtung einen Griff (1) und einen Steuerkolben (5) umfasst, wobei der Steuerkolben (5) eine Aufnahme (54) zur drehfesten Verbindung des Griffs (1) mit dem Anschlussabschnitt der Steuerspindel (81) aufweist, wobei der Griff (1) relativ zu der Aufnahme (54) in axialer Richtung verschiebbar angeordnet ist, wobei eine Arretiereinrichtung angeordnet ist, über die der Griff (1) in wenigstens zwei definierten axialen Positionen relativ zu einer von der Aufnahme (54) aufgenommenen Steuerspindel (81) festlegbar ist, **dadurch gekennzeichnet, dass** die Arretiereinrichtung den Steuerkolben (5) und einen Steuerzylinder (3) umfasst, wobei der Steuerkolben in dem Steuerzylinder (3) geführt ist und der Steuerkolben (5) eine Steuerkulisse (52) aufweist, in die ein an dem Steuerzylinder (3) angeordnetes Eingriffsteil eingreift.

2. Bedieneinrichtung nach Anspruch 1, **dadurch gekennzeichnet, dass** das Eingriffsteil durch eine Kugel (38) gebildet ist, die in dem Steuerzylinder (3) radial sowie vorzugsweise auch umlaufend bewegbar geführt ist.

3. Bedieneinrichtung nach Anspruch 1 oder 2, **dadurch gekennzeichnet, dass** der Griff (1) eine Stellhülse (14) aufweist, die zumindest bereichsweise den Steuerkolben (5) umgibt.

4. Bedieneinrichtung nach Anspruch 3, **dadurch gekennzeichnet, dass** zwischen dem Steuerzylinder (3) und dem Steuerkolben (5) eine Feder (59) angeordnet ist, die gegen den Steuerzylinder (3) vorgespannt ist.

5. Bedieneinrichtung nach Anspruch 3 oder 4, **dadurch gekennzeichnet, dass** die Stellhülse (14) eine Innenverzahnung (18) aufweist, die in eine an dem Steuerkolben (5) angeordnete Außenverzahnung (63) eingreift, wodurch der Griff (1) axial entlang dem Steuerkolben (5) verschiebbar geführt ist.

6. Bedieneinrichtung nach einem der vorgenannten Ansprüche, **dadurch gekennzeichnet, dass** die Aufnahme (54) zur Verbindung mit dem Anschlussabschnitt der Steuerspindel (81) an dem Steuerkolben (5) angeordnet ist.

7. Bedieneinrichtung nach einem der Ansprüche 3 bis 6, **dadurch gekennzeichnet, dass** der Steuerzylinder (3) ein Außengewinde (33) aufweist, auf das ein Adapterstück (2) mit seinem Innengewinde (24) aufgeschraubt ist, wobei das Adapterstück (2) in der Stellhülse (14) des Griffs (1) drehfest sowie längsverschieblich gehalten ist.

8. Bedieneinrichtung nach Anspruch 7, **dadurch gekennzeichnet, dass** das Adapterstück (2) Rastnasen (23) aufweist, wobei innen in der Stellhülse (14) wenigstens eine Rastnut (16, 17) angeordnet ist, mit der die Rastnasen (23) in einer definierten Position des Adapterstücks (2) in der Stellhülse (14) verrastbar sind.

9. Bedieneinrichtung nach Anspruch 8, **dadurch gekennzeichnet, dass** innen in der Stellhülse (14) axial beabstandet zueinander wenigstens zwei Rastnuten (16, 17) vorzugsweise radial umlaufend angeordnet sind.

10. Bedieneinrichtung nach einem der vorgenannten Ansprüche, **dadurch gekennzeichnet, dass** eine Einbauhülse (7) angeordnet ist, deren Innendurchmesser im Wesentlichen dem Außendurchmesser des Griffs (1) entspricht, wobei die Position des Griffs (1) in einem definierten Abstand zur Einbauhülse (7) einstellbar ist.

11. Bedieneinrichtung nach Anspruch 10, **dadurch gekennzeichnet, dass** die Einbauhülse (7) einen umlaufenden Kragen (71) aufweist, der bei Positionierung des Griffs (1) in einer definierten Position in der Einbauhülse (7) mit der Oberfläche des Griffs (1) eine gemeinsame Ebene ausbildet.

12. Ventiloberteil für Sanitärarmaturen, **dadurch gekennzeichnet, dass** das Ventiloberteil eine Bedieneinrichtung nach einem der vorherigen Ansprüchen und eine Steuerspindel (81) aufweist, über die ein Ventilkörper betätigbar ist und die einen unrunden Anschlussabschnitt aufweist, wobei die Steuerspindel (81) mit der Aufnahme (54) der Bedieneinrichtung verbunden ist.

13. Sanitärarmatur mit einem Ventiloberteil, **dadurch gekennzeichnet, dass** die Sanitärarmatur eine Bedieneinrichtung nach einem der Ansprüche 1 bis 11 und eine Steuerspindel (81) aufweist, über die ein Ventilkörper betätigbar ist und die einen unrunden Anschlussabschnitt aufweist, wobei die Steuerspindel (81) mit der Aufnahme der Bedieneinrichtung verbunden ist.

## Claims

1. Operating device for a valve top for sanitary fittings, which has a control spindle (81), via which a valve body can be actuated and which has a connecting section, wherein the operating device comprises a handle (1) and a control piston (5), wherein the control piston (5) has a receptacle (54) for connecting the handle (1) to the connecting section of the control spindle (81) in a rotationally fixed manner, wherein the handle (1) is arranged so as to be displaceable relative to the receptacle (54) in the axial direction, wherein a locking device is arranged, via which the handle (1) can be fixed in at least two defined axial positions relative to a control spindle (81) received by the receptacle (54), **characterised in that** the locking device comprises the control piston (5) and a control cylinder (3), wherein the control piston is guided in the control cylinder (3) and the control piston (5) has a control link (52), in which an engagement part arranged on the control cylinder (3) engages.

2. Operating device according to claim 1, **characterised in that** the engagement part is formed by a ball (38), which is radially as well as preferably also circumferentially movably guided in the control cylinder (3).

3. Operating device according to claim 1 or 2, **characterised in that** the handle (1) has an adjusting sleeve (14), which surrounds the control piston (5) at least in some areas.

4. Operating device according to claim 3, **characterised in that** a spring (59) is arranged between the control cylinder (3) and the control piston (5), which is pretensioned against the control cylinder (3).

5. Operating device according to claim 3 or 4, **characterised in that** the adjusting sleeve (14) has an internal toothing (18), which engages in an external toothing (63) arranged on the control piston (5), whereby the handle (1) is guided axially displaceably along the control piston (5).

6. Operating device according to one of the previous claims, **characterised in that** the receptacle (54) for connection to the connecting section of the control spindle (81) is arranged on the control piston (5).

7. Operating device according to one of claims 3 to 6, **characterised in that** the control cylinder (3) has an external thread (33), onto which an adapter piece (2) is screwed with its internal thread (24), wherein the adapter piece (2) is held in a rotationally fixed as well as longitudinally displaceable manner in the adjusting sleeve (14) of the handle (1).

8. Operating device according to claim 7, **characterised in that** the adapter piece (2) has latching lugs (23), wherein at least one latching groove (16, 17) is arranged on the inside of the adjusting sleeve (14), with which the latching lugs (23) can be latched in a defined position of the adapter piece (2) in the adjusting sleeve (14).

9. Operating device according to claim 8, **characterised in that** at least two latching grooves (16, 17) are preferably radially circumferentially arranged on the inside of the adjusting sleeve (14) at an axial distance from one another.

10. Operating device according to one of the previous claims, **characterised in that** an installation sleeve (7) is arranged, the inner diameter of which substantially corresponds to the outer diameter of the handle (1), wherein the position of the handle (1) can be adjusted at a defined distance from the installation sleeve (7).

11. Operating device according to claim 10, **characterised in that** the installation sleeve (7) has a circumferential collar (71), which forms a common plane with the surface of the handle (1) when the handle (1) is positioned in a defined position in the installation sleeve (7).

12. Valve top for sanitary fittings, **characterised in that** the valve top has an operating device according to one of the previous claims and a control spindle (81), via which a valve body can be actuated and which has a non-circular connecting section, wherein the control spindle (81) is connected to the receptacle (54) of the operating device.

13. Sanitary fitting with a valve top, **characterised in that** the sanitary fitting has an operating device according to one of claims 1 to 11 and a control spindle (81), via which a valve body can be actuated and which has a non-circular connecting section, wherein the control spindle (81) is connected to the receptacle of the operating device.

## Revendications

1. Dispositif de commande pour un élément supérieur de soupape pour robinetteries sanitaires, qui présente une broche de commande (81), laquelle permet d'actionner un corps de soupape et présente un segment de raccordement, sachant que le dispositif de commande comprend une poignée (1) et un piston de commande (5), sachant que le piston de commande (5) présente un logement (54) pour la jonction, ne pouvant pas tourner, entre la poignée (1) et le segment de raccordement de la broche de commande (81), sachant que le poignée (1) est disposée déplaçable en direction axiale relativement au logement (54), sachant qu'est disposé un dispositif de retenue via lequel la poignée (1) est immobilisable sur au moins deux positions axiales définies relativement à une broche de commande (81) logée dans le logement (54), **caractérisé en ce que** le dispositif de retenue comprend le piston de commande (5) et un cylindre de commande (3), sachant que le piston de commande est guidé dans le cylindre de commande (3) et que le piston de commande (5) présente une coulisse de commande (52) dans laquelle engrène une pièce d'engrènement disposée contre le cylindre de commande (3).

2. Dispositif de commande selon la revendication 1, **caractérisé en ce que** la pièce d'engrènement est formée par une bille (38) guidée de façon à se déplacer radialement mais aussi et de préférence périphériquement dans le cylindre de commande (3).

3. Dispositif de commande selon la revendication 1 ou 2, **caractérisé en ce que** la poignée (1) présente une douille d'ajustement (14) qui entoure au moins localement le piston de commande (5).

4. Dispositif de commande selon la revendication 3, **caractérisé en ce qu'**entre le cylindre de commande (3) et le piston de commande (5) est disposé un ressort (59) qui est précontraint contre le cylindre de commande (3).

5. Dispositif de commande selon la revendication 3 ou 4, **caractérisé en ce que** la douille d'ajustement (14) présente une denture intérieure (18) qui engrène dans une denture extérieure (63) disposée contre le piston de commande (5), faisant que la poignée (1) est guidée déplaçable axialement le long du piston de commande (5).

6. Dispositif de commande selon l'une des revendications précédentes, **caractérisé en ce que** le logement (54) destiné à établir la liaison avec le segment de raccordement de la broche de commande (81) est disposé contre le piston de commande (5).

7. Dispositif de commande selon l'une des revendications 3 à 6, **caractérisé en ce que** le cylindre de commande (3) présente un filetage extérieur (33) sur lequel est vissé un adaptateur (2) par son filetage intérieur (24), sachant que l'adaptateur (2) est maintenu dans la douille d'ajustement (14) de la poignée (1) sans pouvoir tourner ainsi que pouvant se déplacer dans le sens longitudinal.

8. Dispositif de commande selon la revendication 7, **caractérisé en ce que** l'adaptateur (2) présente des saillies de crantage (23), sachant qu'à l'intérieur dans la douille d'ajustement (14) est disposée au moins une gorge de crantage (16, 17) avec laquelle les saillies de crantage (23) peuvent encranter, sur une position définie de l'adaptateur (2), dans la douille d'ajustement (14).

9. Dispositif de commande selon la revendication 8, **caractérisé en ce qu'**à l'intérieur de la douille d'ajustement (14) sont disposées, mutuellement distantes axialement, au moins deux gorges de crantage (16, 17) de préférence radiales périphériquement.

10. Dispositif de commande selon l'une des revendications précédentes, **caractérisé en ce qu'**est disposée une douille incorporée (7) dont le diamètre intérieur correspond pour l'essentiel au diamètre extérieur de la poignée (1), sachant que la position de la poignée (1) est réglable sur un écart défini par rapport à la douille incorporée (7).

11. Dispositif de commande selon la revendication 10, **caractérisé en ce que** la douille incorporée (7) présente un col (71) périphérique qui configure un plan commun avec la surface de la poignée (1) lors du positionnement de la poignée (1) sur une position définie dans la douille incorporée (7).

12. Partie supérieure de la soupape pour robinetteries sanitaires, **caractérisée en ce que** la partie supérieure de la soupape présente un dispositif de commande selon l'une des revendications précédentes et une broche de commande (81) via laquelle un corps de soupape est actionnable et qui présente un segment de raccordement non circulaire, sachant que la broche de commande (81) est reliée avec le logement (54) du dispositif de commande.

13. Robinetterie sanitaire avec une partie supérieure de la soupape, **caractérisée en ce que** la robinetterie sanitaire présente un dispositif de commande selon l'une des revendications 1 à 11 et une broche de commande (81) via laquelle un corps de soupape est actionnable et qui présente un segment de raccordement non circulaire, sachant que la broche de commande (81) est reliée avec le logement du dispositif de commande.
